(19) Europäisches Patentamt / European Patent Office / Office européen des brevets

(11) **EP 3 292 083 B1**

(12) **EUROPEAN PATENT SPECIFICATION**

(45) Date of publication and mention
of the grant of the patent:
**15.08.2018 Bulletin 2018/33**

(21) Application number: **16719319.2**

(22) Date of filing: **15.04.2016**

(51) Int Cl.:
***C02F 1/52*** *(2006.01)*          ***B01D 21/01*** *(2006.01)*
***G01N 21/85*** *(2006.01)*          ***E03B 1/04*** *(2006.01)*

(86) International application number:
**PCT/EP2016/058404**

(87) International publication number:
**WO 2016/177552 (10.11.2016 Gazette 2016/45)**

(54) **CONTINUOUS RECYCLING OF WASH WATER WITH FLOCCULATION DEVICE AND PROCESS**

FLOCKUNGSVERFAHREN UND -VORRICHTUNG

PROCÉDÉ ET DISPOSITIF DE FLOCULATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.05.2015 EP 15166556**

(43) Date of publication of application:
**14.03.2018 Bulletin 2018/11**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **BARNE, Sameer Keshav**
**560 066 Bangalore (IN)**
• **RAJAGOPAL, Ramasubramaniam**
**400 099 Mumbai (IN)**
• **SHRESTH, Rudra Saurabh**
**560 066 Bangalore (IN)**
• **THIRUMENI, Dhanalakshmi**
**560 066 Bangalore (IN)**

(74) Representative: **Reijns, Tiemen Geert Pieter**
**Unilever Patent Group
Olivier van Noortstraat 120
3133 AT Vlaardingen (NL)**

(56) References cited:
**EP-A2- 1 690 789          WO-A1-2009/147647
WO-A2-02/083573          DE-A1- 3 427 205
DE-A1- 3 722 240          JP-A- 2000 254 410**

## Description

### Field of the invention

The present invention is in the field of personal care processes and devices. In particular, the invention relates to water saving.

### Background of the invention

Water scarcity is a growing concern in many parts of the world. Washing processes, including laundry, mechanical dishwashing, personal washing and other household cleaning processes, require large amounts of water throughout the world. In general, the water used for personal washing amounts to 25% of the total water used in an average home.

For example, a ten minute shower uses approximately 75 to 190 litres of water, which is 7.5 to 19 litres of water used per minute. The discarded water is a burden to waste water treatment facilities, or to the surface water supply in developing countries.

Water recycling processes and devices in laundry and other household cleaning are known in the art. However, the same cannot be used in recycling personal wash water as the quality of water required for personal wash is different from the quality required for other washing processes.

Hence, an effective continuous process for recycling personal wash water remains to be desired.

JP 2000-317465 discloses a water cleaning device to supply hot water to a bath tub even in the case of clogging in the water cleaning device and water supply becomes difficult. The device is provided with a water cleaning device 8 consisting of a circulating means 18, a flocculating means 19 and a filter means 22; a bypass passage 24 for by-passing the device, a three-way valve 23 for switching the flow passage and a hot water supply means 10 for pouring the hot water to the bath tub. In this way, the hot water supply means can be used by switching the three-way valve 23 to allow the water to flow through the by-pass passage 24 even if cleaning function of the device 8 cannot be used due to clogging etc. Further, JP2000-254410, which is considered to represent the closest prior art, discloses a water purifying device which prevents the deterioration of the purifying performance due to inflow of high temperature water stream to a flocculating means. This water purifying device has a circulating means 18, a flocculating means 19, filter means provided on the downstream side of the flocculating means 19, an upstream side three-way valve 23a provided on the upstream side of the flocculating means 19, a downstream side three-way valve 23b provided on the downstream side of the filter means, a bypass passage 24 for connecting these two three-way valves and a temperature detecting means 54. These two documents, however, do not disclose a bypass wherein the flowpath shifts directly to the water tank bypassing the flocculation tank, in the absence of a surfactant in the flowpath, which is detected by a surfactant detector. US 4,828,709 discloses a complete shower system in which the water is continuously recirculated and filtered resulting in a great reduction in the amount of water that is available for shower usage. The recirculated water is filtered mechanically and contaminants are removed by an absorption unit containing activated carbon. There is no flocculation mechanism is this system due to which a sensor to detect the surfactant is also not present. US 4,828,709 discloses a bypass, however, this is used to lead the purified water back into the recirculation system while the shower is not in use. Accordingly, it is an object of the present invention to reduce the water consumption in conventional personal wash, especially in shower.

It is a further object to provide a washing process that produces waste water which brings a lower burden on the environment, especially the surface water.

It is yet a further object to provide a process that enables the separate disposal of solid waste coming from the wash process.

It is yet a further object to provide a process that removes surfactant from the wash liquor.

It is a further object of the invention to continuously clarify and/or purify washing water through a system that determines the steps in recycling based on level of surfactant in the wash water.

Surprisingly it is found that wash water may be continuously recycled by means of a flocculation system according to the invention comprising a surfactant detector, flocculation system, a water tank for cleaned water and a bypass valve, wherein the flowpath shifts directly to the water tank by means of the valve bypassing the flocculation tank, in the absence of a surfactant in the flowpath.

### Summary of the invention

Accordingly, in a first aspect the invention provides a device for continuous recycling of wash water comprising a flowpath comprising in sequence: a water collection tray, in fluid communication with a surfactant detector, in fluid communication with a valve, in fluid communication with a flocculation tank, in fluid communication with a water tank, in fluid communication with a filter means, in fluid communication with a water dispensing head, in fluid communication with the water collection tray, wherein the device further comprises at least one pump in the flowpath, characterized in that the flowpath shifts directly to the water tank by means of the valve bypassing the flocculation tank, in the absence of a surfactant in the flowpath.

In a second aspect the invention provides a water recycling process using the device according to the invention comprising the steps in sequence of: collecting water from a personal wash process; measuring the surfactant concentration in the collected water; transferring the water based on the surfactant concentration to either: the flocculation tank, wherein after the water is transferred to the flocculation tank, a flocculent is dosed, after which the water is left to flocculate before being transferred to the water tank; or the water tank; transferring the water from the water tank to the filter means; and transferring the water to the water dispensing head.

These and other aspects, features and advantages will become apparent to those of ordinary skill in the art from a reading of the following detailed description and the appended claims. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

**Detailed description of the invention**

In a first aspect the invention provides a device for continuous recycling of wash water comprising a flowpath comprising in sequence a water collection tray, a surfactant detector, a valve a flocculation tank, a water tank, a filter means, and a water dispensing head.

The device

*Water collection tray*

Water collection tray is typically the surface where all the wash water gets collected before being fed into the recycling process.

It is preferably a bathroom floor, a shower platform, a washbasin or a base of a shower cubicle.

The water collection base is preferably made of any material which is resistant to damage by water and surfactants. The preferred materials include plastics, fibre reinforced plastic, concrete, stone resin, acrylic, metal, ceramic or any foam material.

The water collection tray preferably comprises a drain pipe to drain the wash water and preferably the drain pipe is in fluid communication with the surfactant detector.

*Surfactant detector*

Surfactants are detected and analysed using a range of techniques depending on their composition. The preferred techniques are e.g. ionic surfactants can be readily quantified by surfactant-selective electrodes, methods capable of also detecting nonionic surfactants are more complex and involve HPLC, gas chromatography, capillary electrophoresis, contact angle measurement, refractometric analysis, conductivity and fluorescence techniques. However not all of these methods can be applied for in-line measurement.

Alternatively, off-line reagent assays may be used like cationic dyes, but because the reagents (e.g. methylene blue) give colour to the water and need to be removed afterwards, this is not preferred.

The surfactant detector used in the present invention is preferably any system, which is able to measure the concentration of the surfactant in the flow path. Preferably, this includes any system working on the principles of turbidity, scattering of light, UV spectroscopy, IR spectroscopy, calorimetry, interfacial properties such as capillary rise and surface tension.

One preferred surfactant detector is based on light scattering techniques. These generally operate by a small stream of the dirty water that is separated from the main stream and is titrated against a reagent (in this case typically a cationic reagent) which precipitates the anionic surfactant present in the dirty water. The precipitate formation leads to an increase in turbidity of the suspension and the surfactant concentration can be predicted from the knowledge the reagent concentration required to reach a certain turbidity. The reagent for anionic surfactant is preferably a cationic surfactants or cationic polymer/polyelectrolyte.

Another preferred means for the surfactant detector is a spectrophotometric method. Here too, generally a small stream of the dirty water is separated from the main stream and mixed with an indicator (for instance ortho toluidine blue). The anionic surfactant present in the dirty water forms a pink complex with ortho toluidine blue, which upon titration with cationic polyelectrolyte changes into blue colour. Colour change of this titration can be traced by spectroscopic analysis.

The device preferably comprises a control means to which the surfactant detector is connected. Based on the signal provided by the detector to the control means, the control means preferably controls the operation of the valve, more preferably the outlets of the valve.

*Valve*

The valve in the present invention is preferably a three way valve having two outlets, one is preferably connected to the flocculation tank and the other being preferably connected directly to the water tank, and one inlet that is in fluid communication with the surfactant detector. Preferably, the operation of the outlets of the valve is based on the amount of surfactant present in the wash water. If the concentration of surfactant in the wash water is generally less than 50ppm, the outlet of the valve connected to the water tank opens up forming the flowpath and if the concentration of surfactant is generally more than 50ppm, the outlet of the valve connected to the flocculation tank opens up forming the flowpath.

The surfactant detector is preferably connected to a control means. The control means preferably registers a signal coming from the detector. On the basis of this signal, the control means preferably controls the valve. Preferably, the water is diverted directly to the water tank when the surfactant level is low, generally less than 50ppm, or to the flocculation tank when the surfactant level is high, generally at least 50 ppm.

For the avoidance of doubt, the "50 ppm" is used here as an indicative value, and is by no means limiting the invention. More details about the operation of the detector are given in the description of the process.

For the avoidance of doubt, it is not strictly required for the purpose of the invention to use a control means. The detector may control the valve in any commonly known, for instance by using the detector signal as it is, or by any other kind of signal processing.

*Flocculation tank*

The flocculation tank preferably holds an effective water volume of between 2 and 25 L, preferably 5 L to 10 L. The flocculation tank is preferably connected to a flocculent dosing means, for dosing a flocculent composition. The flocculation tank preferably comprises a mixing or stirring device.

Without wishing to be bound by a theory it is thought that the rate of aggregate formation and the size and structure of aggregates formed are primarily controlled by the intensity of agitation, since the collisions of particles are effected by their different drag velocities. The drag velocity of particle depends on the velocity difference between the neighbouring layers of liquid. This difference in velocity across the liquid layer is called the instantaneous velocity gradient G'. G' expresses the intensity of agitation at any point in the agitated system. The value of G' however varies throughout the profile of an agitated system and is difficult to calculate. Therefore the velocity gradient is commonly substituted the root mean square velocity gradient for the instantaneous velocity gradient which is given by the formula

$$G = \sqrt{\frac{P}{V\mu}} \qquad \text{Equation (1)}$$

$$Np = \left[\frac{P}{n^3 D_a^{\,5} \rho}\right] \qquad \text{Equation (2)}$$

Where,

G is the Global velocity gradient($s^{-1}$),
P is the Power dissipated in the liquid medium (Watt),
V is the volume of the liquor to be treated ($m^3$)
$\mu$ is the viscosity ($NS/m^2$)
Np is the Power number
p is the density of the liquid ($kg/m^3$),

N is the rotational speed (rps),

The velocity gradient is expressed by G is a measure of mixing intensity and an important design parameter for coagulation and flocculation units in water and wastewater treatment. Similarly it is important that the period required for agitation corresponds to the retention/residence/mixing time available in the vessel. A high value of G means intense mixture, and a low G value means a slow mixing. The equilibrium between the G employed and the mixing time (t) is expressed through the Camp number; (G•t).

Higher mixing intensity (G) for shorter time (t) and vice versa may not yield similar flocculation performance. Although this approach (G t) has been discussed and criticized by many authors, it is commonly in use in industrial practice for design and control. The best way to design or scale up the flocculator is to maintain the same Camp number (G•t), with same retention/ mixing /residence time of the process. Mixing can be achieved either by passive mixer or active mixer. In passive mixer, the mixing is achieved in pipes, baffle mixer, jet mixers etc., where the power dissipated= flow rate* pressure drop across the device. In active mixer, mixing intensity depends on the type of impeller such as flat blade radial impeller, pitched blade, Ruston turbine etc, baffle thickness, volume of the vessel, impeller location from bottom of vessel etc.,

One of the ways mixing is achieved in the current invention is the use of pitched blade impeller at the following dimensions.

Height of liquid in vessel = Tank diameter (DT)
Diameter of impeller, Da=DT/3
Impeller width = Da/5
Pitch angle = 45°
Number of baffels = 4
Baffle width = Da/10
Impeller location from vessel bottom = DT/3
Volume of water treated: 5 L

For this geometry, Np is constant for turbulent condition, = 1.27 for four pitched (45°) blade impeller.

In the present invention; the preferred G values range from 150 s$^{-1}$ to 3200 s$^{-1}$. The time of mixing ranges from 10 s to 1 min. preferably between 20 s to 30 s.

Under these range of G values, the floc separation occurs by settling or floating. Flocs typically settle when the G value ranges from 150 s$^{-1}$ to 803 s$^{-1}$. The typical settling velocity of flocs measured in these shear rates are 0.1 cm/s to 4.5 cm/s with preferred ranges being 400 s$^{-1}$ to 803 s$^{-1}$ where the settling velocities range from 0.27 cm/s to 4.5 cm/s.

Floatation of flocs typically occurs when the mixing intensity ranges from 1236 s$^{-1}$ to 1800 s$^{-1}$. The raising velocities of flocs in these G domains are 0.2 cm/s to 4.35cm/s.

Depending on the flocculation composition and flocculation process the flocs may be made to float or sink. When the flocs are floating an optional skimming device may be fitter to remove floating flocs. When the flocs are made to sink, an optional filter may be provided at the outlet of the flocculation tank; said filter preferably has a pore size of from 500 mesh (25 μm) to 100 mesh (150 μm) and filter material is made up of nylon, cotton, polycotton or mixtures thereof. The output water from the filter feeds into the water tank.

*Water tank*

The water tank of the present invention is typically used for storing water having low (or no) surfactant. The water tank is optionally connected to a fresh water inlet for adding water to the process. The water tank preferably are of any shape such as cuboid, cylinder oval, and preferably are made of any materials like polyethylene, acrylic, metal, or Teflon. The tank capacity is preferably between 5 L and 30 L.

The tank may optionally comprise an additional pump at its outlet for transferring the water to the filter to provide more flexibility in the water flows through the device.

*Filter means*

The filter is preferably any filter suitable for separating solid particles from the water. The filter preferably removes at least 90% of all particles having a particle size of at least 1 mm, more preferably at least 90% of all particles having a size of at least 500 μm, still more preferably at least 90% of all particles having a size of at least 200 μm, even more preferably at least 90% of all particles having a size of at least 100 μm, yet more preferably at least 90% of all particles having a size of at least 50 μm, even more preferably at least 90% of all particles having a size of at least 10 μm, and most preferably at least 90% of all particles having a size of at least 3 μm.

In a preferred embodiment, the filter is a filter assembly that consists of a pleated filter with an integrated bed filter. The pleated filter is preferably made of non-woven polyester or polypropylene with the pore size ranging from 5 microns to 100 microns. The thickness of the filter medium ranges from 0.5 mm to 10 mm. The filtration may be done by deep bed filtration where the packing material is sand, silica, Bentonite, attapulgite, glass, activated carbon/charcoal etc with the particle size ranging from 0.1 mm to 2-3 mm.

The preferred bed filter is a carbon block filter, which is preferably made of activated carbon particles with size ranging from 0.075 mm to 2.5 mm. The block is made by mixing carbon particles with the binder. The binder used is a thermoplastic polymer e.g., high density polyethylene (HDPE) or LDPE or high molecular weight polypropylene. The proportion of binder to carbon particles is preferably chosen between 1:1 to 1:10 (by weight). The carbon block preferably can also have metal particles like silver, copper, zinc, gold or aluminium within it to provide antimicrobial activity to the recycled water. Post the filtration process, the recycled water is preferably heated by an instant heater.

Such carbon block filters are preferably prepared by the methods as disclosed in WO05094966A1 and WO 2014/067771 A1. The most preferred filter in the present invention is an out-to-in filter wherein the flow enters the annular space and gets filtered in the radial direction and flows out from the middle line. The filter preferably comprises of pleated polyester fabrics with an integrated carbon block. The shape of the carbon block may be of hollow cylinder or hollow cube or cuboid. The dimensions of the carbon block hollow cylinder are preferably 15-30 cm height, outer diameter 4-10 cm, inner diameter 1-4 cm. The diameter of the assembly preferably including pleated filter and carbon block is 5-15 cm diameter. Preferably increasing the dimension of the filter bed (both diameter and length) increases the life of the filter assembly and also increases the capacity. Alternatively the filtration can be in-to-out but preferably the water should first pass through the pleated filter followed by the carbon bed filtration. This sequence is preferably followed to avoid clogging of carbon bed filtration by the particles present in the dirty water.

Apart from the microbe removal by carbon block filter, it is contemplated in the scope of the invention to include a UV chamber, ozone treatment, and/or heat pasteurisation techniques to further reduce microbes in the water.

*Water dispensing head*

The water dispensing head is preferably of any shape like rectangle, square, circle, oval, and combinations thereof. The head may preferably have 1 to 1000 nozzles, more preferably 10 to 500, still more preferably 20 to 100. The nozzles preferably have a diameter ranging from 0.1 to 3 mm. Alternatively, the water dispensing head may have one or more slits instead of nozzles.

*Pump*

The device preferably further comprises at least one pump in the flowpath. The pump is preferably at the beginning of the flow path, directly after the collection tray. The pump is preferably a centrifugal pump or a positive displacement pump such as peristaltic, diaphragm, piston, lobe and gear pumps. The most preferred pump is a centrifugal pump.

*Heating system*

In a preferred embodiment, the device optionally comprises a heating means. The heating means may be any type of inline heating means. The heating means preferably comprises a thermostat for regulating to a constant temperature. When in operation to output water of the heating means, is preferably between 20 and 55°C, more preferably between 25 and 50°C, even more preferably between 30 and 45°C. The heating system is preferably as close to the water dispensing head as possible. Thus, preferably after the filter. Preferably the heating may be controlled at the desired temperature by means of a thermostat valve, diverting part of the water to the inline heater, and leaving the rest through in the normal flowpath, wherein the heated water is merged back into the flow path after the valve.

The Process.

In another aspect, the invention provides a water recycling process using the device according to claim 1 comprising the steps in sequence of:

- collecting water from a personal wash process
- measuring the surfactant concentration in the collected water;
- transferring the water based on the surfactant concentration to either:
  the flocculation tank, wherein after the water is transferred to the flocculation tank, a flocculent is dosed, after which the water is left to flocculate before being transferred to the water tank; or the water tank;

- transferring the water from the water tank to the filter means; and
- transferring the water to the water dispensing head.

The surfactant detector detects amount of surfactant in the wash water. Water that is clean, does not need to be clarified or purified (hereafter only referred to as "purified"), while dirty water requires further purification. The position of the 3-way valve of the device determines whether the water is further purified. When the device is in operation the valve is switched to flocculation at the pre-set switch level of surfactant as detected.

The process capacity for a regular shower is typically 2-20 L/min depending on the shower head, preferably 3-12 L/min, ideally 4-10 L/min. Shower assemblies with one flocculation system connected to more than one shower are not excluded from the scope of this invention. However, when more showers are connected to the same flocculation system, the capacity of the flocculation system is increased correspondingly. To calculate the capacity of such systems, the capacity as indicated in this paragraph shall be taken as the capacity per shower.

The switch level is preferably between 5 and 500 ppm of surfactant, more preferably between 20 and 200 ppm, still more preferably between 30 and 100, even more preferably between 40 and 80, or even between 40 and 60 ppm.

*Process without flocculation*

When the surfactant level in the water is below the switch level, the water is pumped through the diverting valve (3) directly into the water tank (5). From the water tank, the water is then transferred to the filter or filter assembly (7).

*Process with flocculation*

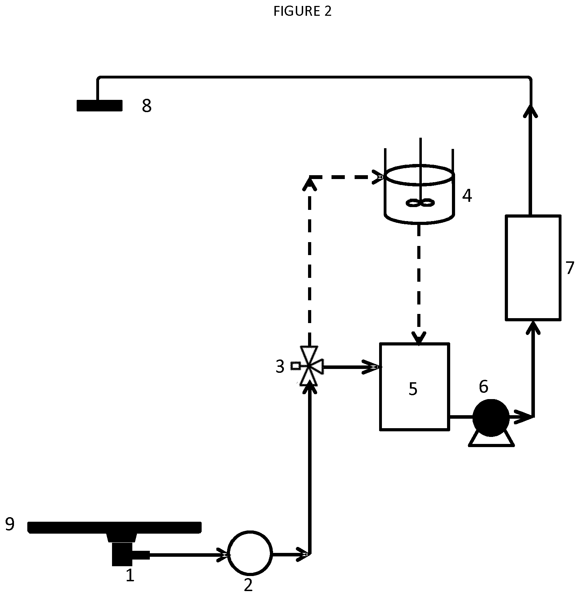

When the water is passed from the 3-way valve to the flocculation tank, the objective is to purify the shower water through a flocculation process followed by filtration and optionally adsorption. This process depicted in Figure 2. During this process, the dirty shower water, which is rich in surfactant, enters the flocculation tank (4) through the diverting valve (3). The flocculation process may be continuous or semi batch. In a continuous flocculation process, the dirty water stream and the flocculant addition are continuous. In case of a semi batch process, the dirty water of volume ranging from 5 L to 10 L is accumulated in the flocculation tank, after which the flow to the flocculation tank stops. Water collected from the shower process while the flow to the flocculation tank is stopped is preferably collected in a buffer tank for the subsequent treatment, unless it has a surfactant concentration below the switch level, in which case it is sent directly to the water tank. After the collection of 5 to 10 L of dirty water during a semi batch process, flocculants are dosed to the flocculation tank. The flocculants are preferably mixed in the flocculation tank for 15 seconds to 3 minutes, more preferably 15 seconds to 1 minute. Depending on the flocculation composition that is used and the mixing conditions, the formed flocs, may sink or float. After the flocculation process, flocculated water is allowed to stand to separate the flocs. The output of the flocculation tank is optionally filtered through a coarse filter. This step is carried out to reduce the load on the filter (7). The pore size of the coarse filter may vary from 500 mesh to 100 mesh and filter material is preferably made up of nylon, cotton, polycotton or mixtures thereof. The filtered water is collected in the water tank (5).

The flocculent preferably comprises an electrolyte flocculant selected from aluminium and/or ferric salts, a neutral and/or anionically modified polymer coagulant, and a solution of a quaternary ammonium cationic surfactant and/or polymers of quaternary ammonium compounds.

Such compositions are suitably disclosed in WO2014/001078, which discloses a composition comprising 8-50% by weight of an electrolyte flocculent selected from aluminium and/or ferric salts, 0.2-5% by weight of a neutral and/or anionically modified polymer coagulant (MW > 100 kD); 0.1-16% by weight of a solution of a quaternary ammonium cationic surfactant and/or polymers of quaternary ammonium compounds and wherein the molar ratio of the active cationic groups on the cationic surfactant or polymer to anionic surfactant in the liquor is between 5:1 and 1:5; and an inorganic filler, having a density of at least 1.5 kg/dm$^3$.

Similar compositions are suitably disclosed in WO2012/084621 and WO2012/084622, which disclose composition comprising 30-70% by weight of an electrolyte flocculent selected from aluminium and ferric salts, 0.5-5% by weight of a neutral and/or anionically modified polymer coagulant (MW > 100 kD), 15-35% by weight of an inorganic filler, having a density of at least 1.5 kg/dm3, and 20-40% by weight of a solution of a quaternary ammonium cationic surfactant and/or polymers of quaternary ammonium compounds and optionally 5-20% by weight of a buffer.

In the water recycling process according to the invention, the flocculant is preferably dosed at a concentration of 2.5 g to 20 g of flocculent composition per 10 liter of water, more preferably 4 g to 17 g per 10 L water, still more preferably 6 g to 15 g per 10 L of water, and ideally about 1 g per liter of water.

After mixing the dirty water with the flocculent, the formed flocs are left to separate from the purified water for 10 s to 1 minutes, more preferably for 20 to 40 s.

**Description of the figures**

The figures are for illustration only and by no means limit the invention to the specific embodiments as shown.

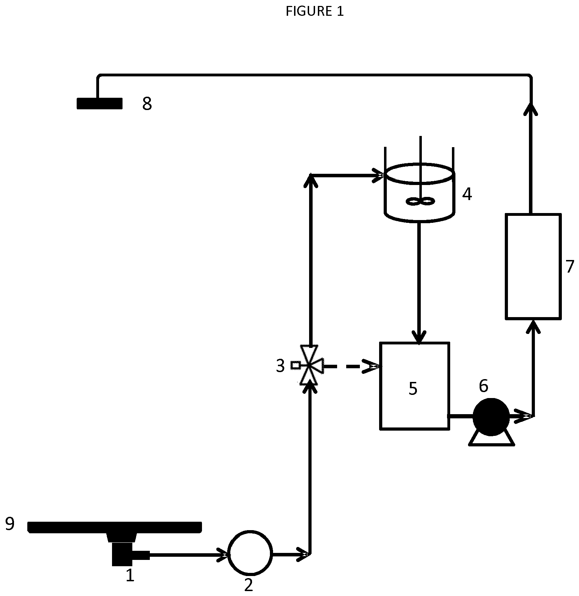

Figure 1 shows an embodiment of a shower according to the invention comprising a flow path, having a drain pipe (1), in fluid communication with surfactant detector (2), , in fluid communication with 3-way valve (3), a flocculation tank (4), in fluid communication with a water tank (5) which is also connected to the 3-way valve (3), a pump (6), a filter (7), in fluid communication with a shower head (8) having a base (9).

Figure 2 shows the same system, but with the 3-way valve (3) positioned such that the water is bypassing the flocculation system and is diverted directly to the water tank (5). Labelling details of the drawings

| | |
|---|---|
| 1 | Shower Drain pipe |
| 2 | Sensor |
| 3 | Diverting 3 way valve |
| 4 | Flocculation tank |
| 5 | Water tank |
| 6 | Pump |
| 7 | Pleated filter & Carbon filter |
| 8 | Shower head |
| 9 | Base of shower cubicle |

Figure 3 shows the floc size distribution (in volume %) at Shear rate: 803 $s^{-1}$, mixing time: 40 s, as measured in example 2 below.

The invention will now be illustrated by means of the following non-limiting examples.

**Examples**

Example 1: shower process.

The following materials and methods were used.

*Shampoo use:*

The model dirt contained 10 g of particulate soil and 8 g of shampoo mixed in 100 ml of 24 FH water. The shampoo was "Dove" with the date & batch no "04/13" " B08". The particulate soil is 90% clay, 5% iron oxide, 5% carbon soot.

*Body Wash liquid (BWL) use:*

The model dirt contained 10 g of particulate soil and 12 g of body wash liquid mixed in 100 ml of 24 FH water. Marketed product "Dove BWL "with the date & batch no ," #25.02.12 2 1" "B208120851MB02" was used. Composition of particulate soil was 90% clay, 5% iron oxide, 5% carbon soot.

*Process Description:*

The first step in the showering process was filling of 15 L of 24 FH (Ca: Mg 2:1) of deionised water in the water tank. Post this the process lines were filled. After the process lines are filled shower was started. The samples were collected from shower head at different time intervals as shown in the table below. They were analyzed for turbidity, pH and anionic surfactant. The details of dirt introduced into the shower tray (to mimic soil from consumers) are given below: The showering and sample collection continued for 10 minutes.

1. Shampoo dirt is poured into the shower tray at 1min.
2. BWL dirty is poured into the shower tray at 3 min.

After the dirty water is added to the drain streams, the sensors measure the presence of surfactant and divert the drain water to the flocculation tank till the surfactant residue in the drain water is < 50 ppm. When the surfactant concentration is less than 50 ppm, the diverting valve opens the flow path to the clean water tank which simultaneously activates the dosing of flocculents and stirring of the flocculation tank.

For the given set of experimental conditions, this caters to the collection of 10 L of dirty water in the flocculation tank.

*Flocculation process:*

The flocculation tank is stirred at 600 rpm for 30 S which gives a shear rate of 1200 s$^{-1}$. The details of flocculent composition are given below.

Composition:

| Ingredients | Composition (%) |
|---|---|
| Poly Aluminium Chloride, PAC | 23.8 |
| Sodium carbonate | 17.9 |
| BAC coated Feldspar | 57.1 |
| Anionic polyacrylamide | 1.2 |

The results are given in the table below.

Results:

| Showering time, min | pH | Turbidity, NTU | Surfactant conc. PPM |
|---|---|---|---|
| 0 | 7.6 | 0.4 | 0.0 |
| 1.0 | 7.6 | 0.6 | 0.0 |
| 1.8 | 7.5 | 1.1 | 15.9 |
| 2.5 | 7.5 | 0.4 | 8.0 |
| 3.5 | 7.3 | 0.8 | 8.0 |
| *4.3 | 7.6 | 0.4 | 8.0 |
| 5.0 | 7.8 | 0.7 | 8.0 |
| 6.5 | 7.6 | 1.1 | 8.0 |
| 10.5 | 7.7 | 0.7 | 8.0 |

The above table shows the analysis of water quality of the recycled water samples that were collected from the shower head at different time intervals. It can be seen that post the introduction of dirty water into the shower drain at 1 min and 3 min, the residual level of surfactant in the recycled water increased to 15.9 ppm which then reduces to 8 ppm on prolonged exposure to carbon block in the process lines. The pH of the recycled water is 7.5, which is close to the source water pH. Turbidity of the recycled water is less than 1 NTU, which is much cleaner than the turbidity of the source water.

Example 2: Floc size and flocculation performance

The flocculation performance was quantified by measuring the floc size and separation rate of flocs. Different protocols to measure the floc size and settling/raising velocity of flocs are explained below.

*Settling velocity*

A floc is a very fragile particle that has high water content. The measurement of floc size or settling velocity should be done without touching a floc. In addition to this, flocs can change their size by flocculation. Hence the measurements were performed in a dilute suspension in order to avoid flocculation during the analysis.

Considering these effects, the experimental methods in which the settling velocity and floc size of a discrete floc were measured were carried out in quiescent water column. Immediately after flocculation, 20 ml of the flocculated suspension is transferred to the quiescent column through a 50 ml beaker. The quiescent column is 40 cm long with a cross section of 4.5 cm X 5.5 cm. After the transfer of the flocculated suspension, settling of the flocs was recorded through a camera (Nikon D3 100, Lens 105 mm Micron Lens). The column is graduated by scale as to facilitate the measurement of settling velocity of flocs.

The camera was aimed at the bottom end of the column (the last 5 cm) so that the flocs would have reached the terminal settling velocity.

The recorded clip from the camera was then played back to measure the settling velocity of the flocs. Settling velocities of 100 flocs were measured and the results as function of shear rate is tabulated below.

Images were sliced from the video and images were analyzed for floc size using (Olympus Micro Image) software.

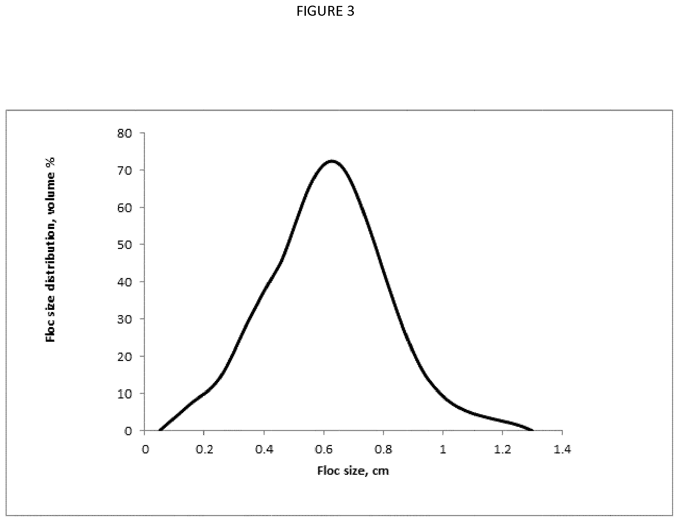

Figure 3 shows the floc size distribution (volume %) at a shear rate of 803 $s^{-1}$ and a mixing time of 40 s.

| Shear rate(G), S-1 | Floc size, cm | | | Settling velocity , cm/S | | |
|---|---|---|---|---|---|---|
| | Min | Max | Median | Min | Max | Median |
| 154 | 0.003 | 0.50 | 0.03 | 0.10 | 2.31 | 0.22 |
| 437 | 0.019 | 1.13 | 0.05 | 0.27 | 2.31 | 0.50 |
| 803 | 0.024 | 1.71 | 0.07 | 0.31 | 4.55 | 0.71 |
| 1236 | 0.018 | 1.77 | 0.06 | 0.20 | 4.35 | 0.74 |

In the present invention; the preferred G values range from 150 $s^{-1}$ to 3200 $s^{-1}$. The time of mixing ranges from 10 s to 1 min. preferably between 20 s to 30 s.

The example demonstrates that under these range of G values, the floc separation occurs by settling or floating. Floc settles when the G value ranges from 150 $s^{-1}$ to 803 $s^{-1}$. The typical settling velocity of flocs measured in these shear rates are 0.1 cm/s to 4.5 cm/s. With preferred ranges being 400 $s^{-1}$ to 803 $s^{-1}$ where the settling velocities range 0.27 cm/S to 4.5 cm/s. Flotation of flocs occurs when mixing intensity ranges from 1236 $s^{-1}$ to 1800 $s^{-1}$. The raising velocities of flocs in these G are 0.2 cm/s to 4.35 cm/s.

**Claims**

**1.** A device for continuous recycling of wash water comprising a flowpath comprising in sequence

    a. a water collection tray, in fluid communication with
    c. a valve (3), in fluid communication with
    d. a flocculation tank (4), in fluid communication with
    e. a water tank (5), in fluid communication with
    f. a filter means (7), in fluid communication with
    g. a water dispensing head (8), in fluid communication with
    h. the water collection tray (a)

wherein the device further comprises at least one pump (6) in the flowpath, **characterized in that** the water collection tray (a) is in fluid communication with
b. a surfactant detector (2), which is in fluid communication with
the valve (3) (c), the flowpath shifting directly to the water tank (5) by means of the valve (3) bypassing the flocculation tank (4), in the absence of a surfactant in the flowpath.

**2.** A device according to claim 1, wherein the valve (3) has two outlets, one being connected to the flocculation tank (4) and the other being connected directly to the water tank (5); and one inlet that is in fluid communication with the surfactant detector (2).

3. A device according to claim 1 or 2, wherein the surfactant detector (2) is connected to a control means, wherein the control means controls the operation of the valve (3).

4. A device according to any one of the preceding claims, wherein the water collection tray is a bathroom floor, a wash basin or a base (9) of a shower cubicle.

5. A device according to any one of the preceding claims, wherein the filter means (7) is a pleated and carbon filter.

6. A device according to any one of the preceding claims, wherein the device further comprises a flocculent dosing system for dosing a flocculent to the flocculation tank (4).

7. A water recycling process comprising the steps in sequence of:

   a. Collecting water from a personal wash process;
   d. Transferring the water from a water tank (5) to filter means (7); and
   e. Transferring the water to a water dispensing head (8),

   the water recycling process being **characterized in that** it uses the device according to any one of claims 1 to 6, the process further comprising the following steps between the steps (a) and (d):

   b. Measuring the surfactant concentration in the collected water; and
   c. Transferring the water based on the surfactant concentration to either:

   i the flocculation tank (4), wherein after the water is transferred to the flocculation tank (4), a flocculent is dosed, after which the water is left to flocculate before being transferred to the water tank (5); or
   ii the water tank (5).

8. A water recycling process according to claim 7, wherein the flocculent comprises 8-50% by weight of an electrolyte flocculent selected from aluminium and/or ferric salts, 0.2-5% by weight of a neutral and/or anionically modified polymer coagulant; 0.1-16% by weight of a solution of a quaternary ammonium cationic surfactant and/or polymers of quaternary ammonium compounds and wherein the molar ratio of the active cationic groups on the cationic surfactant or polymer to anionic surfactant in the liquor is between 5:1 and 1:5; and an inorganic filler, having a density of at least 1.5 kg/dm$^3$

9. A water recycling process according to claim 7 or 8, wherein the flocculant is dosed at a concentration of 2.5 to 20 g of flocculent composition per 10 liter of water.

10. A water recycling process according to claims 7 to 9, wherein the water is left to flocculate for 10 seconds to 1 minutes.

**Patentansprüche**

1. Einrichtung zur kontinuierlichen Wiederaufbereitung von Spülwasser, die einen Strömungsweg umfasst, der der Reihe nach Folgendes umfasst:

   a. eine Wassersammelwanne in Fluidkommunikation mit
   c. einem Ventil (3) in Fluidkommunikation mit
   d. einem Flockungstank (4) in Fluidkommunikation mit
   e. einem Wassertank (5) in Fluidkommunikation mit
   f. einem Filtermittel (7) in Fluidkommunikation mit
   g. einem Wasserabgabekopf (8) in Fluidkommunikation mit
   h. der Wassersammelwanne (a),

   wobei die Einrichtung ferner mindestens eine Pumpe (6) in dem Strömungsweg umfasst,
   **dadurch gekennzeichnet, dass** sich die Wassersammelwanne (a) in Fluidkommunikation befindet mit
   b. einem Tensid-Detektor (2),
   der in Fluidkommunikation mit dem Ventil (3) (c) ist, wobei der Strömungsweg beim Fehlen eines Tensids in dem Strömungsweg unter Umgehung des Flockungstanks (4) mittels des Ventils (3) direkt zu dem Wassertank (5) umschaltet.

2. Einrichtung nach Anspruch 1, wobei das Ventil (3) zwei Auslasse besitzt, wovon einer mit dem Flockungstank (4) verbunden ist und der andere direkt mit dem Wassertank (5) verbunden ist, wobei ein Einlass in Fluidkommunikation mit dem Tensid-Detektor (2) ist.

3. Einrichtung nach Anspruch 1 oder 2, wobei der Tensid-Detektor (2) mit einem Steuermittel verbunden ist, wobei das Steuermittel die Betätigung des Ventils (3) steuert.

4. Einrichtung nach einem der vorhergehenden Ansprüche, wobei die Wassersammelwanne ein Badezimmerboden, ein Waschbecken oder ein Boden (9) einer Duschkabine ist.

5. Einrichtung nach einem der vorhergehenden Ansprüche, wobei das Filtermittel (7) ein gefalteter Kohlefilter ist.

6. Einrichtung nach einem der vorhergehenden Ansprüche, wobei die Einrichtung ferner ein Flockungsmitteldosiersystem zum Dosieren eines Flockungsmittels in den Flockungstank (4) umfasst.

7. Wasserwiederaufbereitungsvorgang, der der Reihe nach folgende Schritte umfasst:

   a. Sammeln von Wasser von einem Körperreinigungsvorgang;
   d. Übertragen des Wassers von einem Wassertank (5) zu Filtermitteln (7); und
   e. Übertragen des Wassers zu einem Wasserabgabekopf (8),

   wobei der Wasserwiederaufbereitungsvorgang **dadurch gekennzeichnet ist, dass** er die Einrichtung nach einem der Ansprüche 1 bis 6 verwendet, wobei der Vorgang ferner zwischen den Schritten (a) und (d) die folgenden Schritte umfasst:

   b. Messen der Tensid-Konzentration in dem gesammelten Wasser; und
   c. Übertragen des Wassers auf der Grundlage der Tensid-Konzentration entweder

      i in den Flockungstank (4), wobei, nachdem das Wasser in den Flockungstank (4) übertragen worden ist, ein Flockungsmittel dosiert wird, wonach das Wasser dem Ausflocken überlassen wird, bevor es in den Wassertank (5) übertragen wird; oder
      ii in den Wassertank (5).

8. Wasserwiederaufbereitungsvorgang nach Anspruch 7, wobei das Flockungsmittel 8 bis 50 Gew.-% eines Elektrolytflockungsmittels, das aus Aluminium- und/oder Eisensalzen gewählt ist, 0,2 bis 5 Gew.-% eines neutralen und/oder anionisch modifizierten Polymer-Koagulationsmittels, 0,1 bis 16 Gew.-% einer Lösung eines quartären Ammonium-Kation-Tensids und/oder Polymeren von quartären Ammoniumverbindungen, wobei das Molverhältnis der aktiven kationischen Gruppen zu dem kationischen Tensid oder von Polymer zu anionischem Tensid in der Flüssigkeit im Bereich von 5:1 bis 1:5 liegt; und einen anorganischer Füllstoff, der eine Dichte von mindestens 1,5 kg/dm$^3$ besitzt, umfasst.

9. Wasserwiederaufbereitungsvorgang nach Anspruch 7 oder 8, wobei das Flockungsmittel mit einer Konzentration im Bereich von 2,5 bis 20 g Flockungsmittelzusammensetzung pro 10 Liter Wasser dosiert ist.

10. Wasserwiederaufbereitungsvorgang nach den Ansprüchen 7 bis 9, wobei das Wasser während einer Dauer im Bereich von 10 Sekunden bis 1 Minute dem Ausflocken überlassen wird.

**Revendications**

1. Dispositif pour recyclage continu d'eau de lavage comprenant une trajectoire d'écoulement comprenant successivement :

   a. un plateau de recueil d'eau, en communication fluide avec
   c. une vanne (3), en communication fluide avec
   d. un récipient de floculation (4), en communication fluide avec

e. un réservoir d'eau (5), en communication fluide avec

f. un moyen de filtre (7), en communication fluide avec

g. une tête de distribution d'eau (8), en communication fluide avec

h. le plateau de recueil d'eau (a)

dans lequel le dispositif comprend de plus au moins une pompe (6) dans la trajectoire d'écoulement, **caractérisé en ce que** le plateau de recueil d'eau (a) est en communication fluide avec

b. un détecteur de tensioactif (2), qui est en communication fluide avec

la vanne (3) (c), la trajectoire d'écoulement réalisant une dérivation directe vers le réservoir d'eau (5) au moyen de la vanne (3) réalisant une dérivation du réservoir de floculation (4), en l'absence d'un tensioactif dans la trajectoire d'écoulement.

2. Dispositif selon la revendication 1, dans lequel la vanne (3) présente deux sorties, une étant raccordée au réservoir de floculation (4) et l'autre étant connectée directement au réservoir d'eau (5) ; et une entrée qui est en communication fluide avec le détecteur de tensioactif (2).

3. Dispositif selon la revendication 1 ou 2, dans lequel le détecteur de tensioactif (2) est connecté à un moyen de contrôle, dans lequel le moyen de contrôle contrôle le fonctionnement de la vanne (3).

4. Dispositif selon l'une quelconque des revendications précédentes, dans lequel le plateau de recueil d'eau est un sol de salle de bain, un lavabo ou une base (9) d'un réceptacle de douche.

5. Dispositif selon l'une quelconque des revendications précédentes, dans lequel le moyen de filtre (7) est un filtre plissé et au charbon.

6. Dispositif selon l'une quelconque des revendications précédentes, dans lequel le dispositif comprend de plus un système de dosage de floculant pour doser un floculant dans le réservoir de floculation (4).

7. Procédé de recyclage d'eau comprenant les étapes successivement de :

a. recueil d'eau à partir d'un procédé de lavage de personne ;

d. transfert de l'eau d'un récipient d'eau (5) vers un moyen de filtre (7) ; et

e. transfert de l'eau vers une tête de distribution d'eau (8),

le procédé de recyclage d'eau étant caractérisé en qu'il utilise le dispositif selon l'une quelconque des revendications 1 à 6, le procédé comprenant de plus les étapes suivantes entre les étapes (a) et (d) :

b. mesure de la concentration en tensioactif dans l'eau recueillie ; et

c. transfert de l'eau sur la base de la concentration en tensioactif vers soit :

i le récipient de floculation (4), dans lequel après que l'eau est transférée vers le réservoir de floculation (4), un floculant est dosé, après quoi l'eau est laissée à floculer avant d'être transférée vers le récipient d'eau (5) ; soit

ii le réservoir d'eau (5).

8. Procédé de recyclage d'eau selon la revendication 7, dans lequel le floculant comprend 8-50 % en masse d'un floculant d'électrolyte choisi parmi des sels d'aluminium et/ou ferriques, 0,2-5 % en masse d'un coagulant polymère neutre et/ou anioniquement modifié ; 0,1-16 % en masse d'une solution d'un tensioactif cationique d'ammonium quaternaire et/ou de polymères de composés d'ammonium quaternaire et dans lequel le rapport molaire des groupes cationiques actifs sur le tensioactif cationique ou le polymère au tensioactif anionique dans la liqueur est de 5:1 à 1:5 ; et une charge inorganique, ayant une densité d'au moins 1,5 kg/dm$^3$.

9. Procédé de recyclage d'eau selon la revendication 7 ou 8, dans lequel le floculant est dosé à une concentration de 2,5 à 20 g de composition de floculant pour 10 litres d'eau.

10. Procédé de recyclage d'eau selon les revendications 7 à 9, dans lequel l'eau est laissée à floculer pendant de 10 secondes à 1 minute.

FIGURE 1

FIGURE 2

FIGURE 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000317465 A
- JP 2000254410 A
- US 4828709 A
- WO 05094966 A1
- WO 2014067771 A1
- WO 2014001078 A
- WO 2012084621 A
- WO 2012084622 A